(19)

Europäisches Patentamt
European Patent Office
Office européen des brevets

(11) **EP 4 397 547 A1**

(12) **EUROPEAN PATENT APPLICATION**

(43) Date of publication:
**10.07.2024 Bulletin 2024/28**

(21) Application number: **23172671.2**

(22) Date of filing: **10.05.2023**

(51) International Patent Classification (IPC):
**B60R 21/0134** (2006.01)

(52) Cooperative Patent Classification (CPC):
**B60R 21/0134;** Y02T 10/40

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.01.2023 CN 202310000753**

(71) Applicant: **Chongqing Changan Automobile Co., Ltd.**
**Chongqing 400023 (CN)**

(72) Inventors:
- **Li, Ruiyang**
  **Chongqing, 400023 (CN)**
- **He, Xin**
  **Chongqing, 400023 (CN)**

- **Zhang, Xiaoyu**
  **Chongqing, 400023 (CN)**
- **Zhan, Zhangsong**
  **Chongqing, 400023 (CN)**
- **Cui, Taisong**
  **Chongqing, 400023 (CN)**
- **Zhang, Bin**
  **Chongqing, 400023 (CN)**
- **Li, Jie**
  **Chongqing, 400023 (CN)**
- **Mao, Rongjie**
  **Chongquin, 400023 (CN)**

(74) Representative: **adares Patent- und Rechtsanwälte**
**Reininger & Partner GmbB**
**Tauentzienstraße 7 b/c**
**10789 Berlin (DE)**

(54) **VEHICLE COLLISION RISK PREDICTION DEVICE AND METHOD**

(57) Disclosed is a vehicle collision risk prediction device and method. The device includes a perception component, a basic component, a prediction component, and a decision component. The perception component is configured to collect human, environment and vehicle related information. The basic component is configured to predict position parameters of an occupant from a current moment to a future moment according to scene parameters of a scene that the occupant is currently in. The prediction component is configured to predict reliability criteria of expectation parameters according to the scene parameters and expectation parameters when a hypothetical collision occurs. The decision component is configured to acquire the expectation parameters and the corresponding reliability criteria, assess a comprehensive collision risk while taking into account criteria of extreme values and change trends of predicted signals in the time domain, and output a control instruction. In this way, a command with explicit guidance may be sent for application scenarios such as a vehicle pre-warning during a pre-collision stage, pre-collision system activation, active intervention of an auxiliary/automatic driving system, ignition of an airbag controller during a collision stage, and driving risk evaluation and judgement.

Fig. 1

## Description

### Field of the Invention

The present disclosure relates to the technical field of design of intelligent vehicles, and in particular, to a vehicle collision risk prediction device and method based on model design and data-driven fusion.

### Background of the Invention

The collision safety technology is to absorb the energy from a collision occurred between a vehicle and a target object through the vehicle body structure, the restraint system, the pedestrian protection device, etc., within a limited time and space, so as to avoid or reduce injuries of the occupants and people outside the vehicle during the collision.

The conventional collision safety occupant protection system merely uses several external acceleration or pressure sensors to identify whether a collision accident occurs. With the limited perception ability, in some actual road traffic accidents, the airbag may explode too late, or cannot explode, or explode in non-explode conditions (malfunction). The conventional development standards for collision safety are limited to the test conditions and the limited standard body shapes and sitting attitudes of the dummy. However, in the environment of intelligence-assisted human driving with "human-vehicle-human" interactions, the driver in driving may perform different reactions and operations (operation uncertainty) based on the running state of the vehicle from the opposite side, the road conditions and other factors, and the human body may be injured very differently depending on the human, timing and local conditions. The conventional collision safety technology functions only within about 150 ms after an accident, and the occupant protection system needs to absorb the energy of the collision in a very short time, and the energy transmitted to the occupant per unit time is high, resulting in more severe injuries. The conventional collision safety technology generally uses the event data recorder (EDR) to record the vehicle data when a crash occurs, without providing the detailed information of vehicle injuries and human injuries required by accident rescue (E-Call), after-sales maintenance and insurance claims.

### Summary of the Invention

An object of the present disclosure is to overcome the disadvantages in the prior art and to propose a method for rapidly predicting a vehicle collision risk and a vehicle injury risk and a human injury risk when a hypothetical collision occurs while taking into account the operation uncertainty caused by the driver's stress during vehicle travel. Based on parameters captured by a perception component at a current moment, the vehicle and human injury risks are predicted, and by taking into account the uncertainty of the vehicle state caused by the driver operation uncertainty at the current moment, reliability criteria of the collision risk, the vehicle injury risk and the occupant injury risk are calculated. Based on the above criteria, a safety evaluation signal or instruction with explicit guidance may be sent for application scenarios such as a vehicle pre-warning during a pre-collision stage, pre-collision system activation, active intervention of an auxiliary/automatic driving system, ignition of an airbag controller during a collision stage, and driving risk evaluation and judgement.

In order to achieve the above target object, the present disclosure adopts the following technical solutions.

A vehicle collision risk prediction device includes a perception component, a basic component, a prediction component, and a decision component; the perception component is configured to acquire a comprehensive data set including human, environment and vehicle related information; the basic component is configured to output a collision risk $CR$ and scene parameters of a collision according to the environment and vehicle related information, and obtain state parameters of an occupant at a collision moment according to the human and vehicle related information; the prediction component is configured to output a vehicle injury risk $VIR$ and a collision waveform according to the scene parameters of the collision, determine a human injury risk $HIR$ according to the collision waveform, the state parameters of the occupant at the collision moment and state parameters of a restraint system input by the perception component, and determine corresponding reliability criteria according to the scene parameters of the collision and expectation parameters including the collision risk $CR$, the human injury risk $HIR$ and the vehicle injury risk $VIR$; and the decision component is configured to acquire the expectation parameters and corresponding reliability criteria, assess a comprehensive collision risk based on criteria of extreme values and change trends of predicted signals in the time domain, and output a control instruction.

Furthermore, the perception component includes a human perception module, an environment perception module, and a vehicle perception module;

the human perception module is configured to acquire the state parameters of the occupant in real time, wherein the state parameters of the occupant are acquired by a camera and/or a TOF camera, and include basic parameters of the occupant and position parameters of the occupant, the basic parameters of the occupant include a height, a weight and an age of the occupant, the position parameters of the occupant include a sitting attitude of the occupant and a sitting position of the occupant, the sitting attitude of the occupant includes a recline angle and a leaning angle of the occupant, and the occupant sitting position refers to an absolute position of the occupant relative to the vehicle;

the environment perception module is configured to acquire parameters of the target object in real time, wherein the parameters of the target object include a mass, dimensions, a type, and kinematic parameters of the target object, and the kinematic parameters of the target object include a velocity, an acceleration, a yaw angle and a yaw rate of the target object;

the vehicle perception module is configured to acquire parameters of the current vehicle and the state parameters of the restraint system in real time, wherein the parameters of the current vehicle include a mass, dimensions, and kinematic parameters of the current vehicle, and the kinematic parameters of the current vehicle include a velocity, an acceleration, a yaw angle and a yaw rate of the current vehicle.

Furthermore, the basic component includes a digital human body module and a vehicle prediction module; the digital human body module is configured to predict position parameters of the occupant from a current moment to a future moment according to scene parameters of a scene that the occupant is currently in; the vehicle prediction module includes a state parameter preprocessing unit, a trajectory prediction unit and a collision detection unit; the state parameter preprocessing unit is configured to number and classify a target object locked by the perception component; the trajectory prediction unit is configured to correct a motion state of the locked target object or predict a travel trajectory of a current vehicle and/or the target object within a preset time range using a kinematic or dynamic model; the collision detection unit is configured to detect whether a collision occurs between the current vehicle and the target object at a specific moment.

Furthermore, the state parameter preprocessing unit numbers and classifies a target object locked by the perception component specifically by: numbering the target object locked by the perception component, calculating a time-to-collision $TTC$ of each target object, and sorting the target object in an ascending order according to the $TTC$ of each target object; presetting a first time-to-collision threshold $TTC_{thres1}$ and a second time-to-collision threshold $TTC_{thres2}$, and if the time-to-collision $TTC$ of a target object satisfies $TTC_{thres1} \leq TTC \leq TTC_{thres2}$, defining the target object as a potential dangerous target object, classifying the target object into a potential dangerous target object set, and continuously monitoring the motion state of the target object; and if the time-to-collision $TTC$ of a target object satisfies $TTC < TTC_{thres1}$, defining the target object as a dangerous target object, and classifying the target object into a dangerous target object set.

The trajectory prediction unit corrects the motion state of the target object in the potentially dangerous target object set, and predicts the travel trajectories of the current vehicle and the target object in the dangerous target object set within a preset time range using the kinematic or dynamic model.

The collision detection unit is configured to detect whether a collision occurs between the current vehicle and the target object at a specific moment, and if the current vehicle comes into contact in space with the target object, define such contact as a collision and the moment as a collision moment $T_c$ with the collision risk CR = 1, and record the scene parameters of the collision at the moment $T_c$, the scene parameters of the collision including the velocity of the current vehicle, the velocity of the target object, a collision overlap ratio, a collision angle, the mass of the target object, and the type of the target object; and if no contact is detected, define the collision risk as CR = 0.

The detection of the collision detection unit includes a rough detection stage and a detailed detection stage, in which the rough detection includes: calculating a distance $L_i$ between a geometric center of the current vehicle and a geometric center of the target object, and calculating respective minimum enveloping circles of the current vehicle and the target object with the centers of the enveloping circles locating at the respective geometric centers of the current vehicle and the target object, and when the enveloping circle of the current vehicle is tangent to the enveloping circle of target object, recording the distance between the geometric centers of the current vehicle and the target object as $L_{crit}$, and if $L_i < \alpha L_{crit}$, performing the detailed detection, $a$ being a gain coefficient; the detailed detection is performed to detect whether there is an overlap or not in space between the current vehicle and the target object, and if there is an overlap, such overlap is defined as a contact, and the detailed detection is performed specifically using a separating axis theorem (STA) method or a Gibert-Johnson-Keerthi (GJK) method.

Furthermore, the motion state is corrected through trajectory correction by means of an extended Kalman filter, and the dynamic model is a constant turn rate and acceleration motion model, a constant acceleration model or a constant velocity model.

Furthermore, the prediction component includes a human injury prediction module, a vehicle injury prediction module, and a reliability prediction module; the human injury prediction module is configured to predict an injury curve of the occupant after a hypothetical collision in real time according to the collision waveform, the state parameters of the occupant and the state parameters of the restraint system when the current vehicle has a collision, and calculate a human injury risk according to the injury curve; the vehicle injury prediction module includes a deformation amount prediction unit and a collision waveform prediction unit; the deformation amount prediction unit is configured to predict a vehicle injury risk after a hypothetical collision in real time according to the scene parameters of the collision at the collision moment; the collision waveform prediction unit is configured to predict a collision waveform after a hypothetical collision according to the scene parameters of the collision, the predicted collision waveform being used as one of inputs of the human injury prediction module; the reliability prediction module is configured to predict reliability criteria $\Sigma CR, \Sigma HIR, \Sigma VIR$ of the expectation parameters $CR$, $HIR$ and $VIR$ according to the scene parameters and the expectation parameters when a hypothetical collision occurs.

Furthermore, the human injury prediction module is an off-line human injury prediction model which is trained on the basis of a human injury data set, wherein the human injury data set is a database which is input with the collision waveform, the state parameters of the occupant and the state parameters of the restraint system and outputs a human injury curve, and is obtained by numerical calculation of the restraint system or collision tests;

the deformation amount prediction unit is an off-line deformation amount prediction model which is trained on the basis of a vehicle injury data set, and the collision waveform prediction unit is an off-line collision waveform prediction model which is trained on the basis of the vehicle injury data set, wherein the vehicle injury data set is a database which is input with the scene parameters of the collision at the collision moment $T_c$ and outputs a vehicle deformation amount and waveform characteristic values for the collision waveform prediction unit, and is obtained by whole vehicle finite element numerical calculation, whole vehicle collision tests or collision accident collection;

the reliability prediction module is an off-line reliability prediction model which is trained on the basis of a reliability quantitative criterion database, wherein the reliability quantitative criterion database refers to a database which is input with the scene parameters and the expectation parameters and outputs reliability criteria of the current scene.

Furthermore, the deformation amount prediction model, the collision waveform prediction model and the reliability prediction model use a machine learning integration algorithm of a random forest and an XGBOOST machine learning integrated algorithm, or use a neural network algorithm of multi-layer perceptron, CNN and RNN.

Furthermore, the reliability prediction module performs calculation by: according to the scene parameters and the expectation parameters at the current moment, while considering driver operation uncertainty, setting U discrete values of the driver operation uncertainty corresponds to U different driving trajectories, and obtaining U different vehicle collision risk prediction results, U human injury risk prediction results and U vehicle injury risk prediction results according to the vehicle prediction module, the human injury prediction module and the vehicle injury prediction module, respectively, represented as:

$$[(CR_{k\_1}, HIR_{k\_1}, VIR_{k\_1}), (CR_{k\_2}, HIR_{k\_2}, VIR_{k\_2}), \dots, (CR_{k\_U}, HIR_{k\_U}, VIR_{k\_U})],$$

the reliability quantitative criterion for the k-th target object is represented as:

$$\begin{cases} \sum CR_k = \frac{1}{U}\sum_{r=1}^{U}(CR_{k\_r} - CR_k)^2 \\ \sum HIR_k = \frac{1}{U}\sum_{r=1}^{U}(HIR_{k\_r} - HIR_k)^2 ; \\ \sum VIR_k = \frac{1}{U}\sum_{r=1}^{U}(VIR_{k\_r} - VIR_k)^2 \end{cases}$$

the smaller the $\Sigma CR$ is, the more accurate the $CR$ is and more likely to occur, otherwise, the greater the $\Sigma CR$ is, the more unstable the $CR$ is when the driver makes an operation for intervention and less likely to occur;

the smaller the $\Sigma HIR$ is, the more accurate the $HIR$ is and more likely to occur, otherwise, the greater the $\Sigma HIR$ is, the more unstable the $HIR$ is when the driver makes an operation for intervention and less likely to occur;

the smaller the $\Sigma VIR$ is, the more accurate the $VIR$ is and more likely to occur, otherwise, the greater the $\Sigma VIR$ is, the more unstable the $VIR$ is when the driver makes an operation for intervention and less likely to occur.

Furthermore, the driver operation uncertainty is quantitatively characterized by: discretizing, if physical conditions permit, the acceleration $a$ and the yaw rate $\omega$ in a driver operation behavior database, setting $\zeta$ discrete values for the acceleration $a$ and $\eta$ discrete values for the yaw rate $\omega$, i.e., $a = [a_1, a_2, \dots, a_\zeta]$, $\omega = [\omega_1, \omega_1, \dots, \omega_\eta]$, and establishing a driver operation behavior posteriori model and generating different trajectories.

Furthermore, the decision component outputs the control instruction through fuzzy control, empirical calibration, or logical judgment.

The decision component obtains a total of six criteria of the risks (*CR, HIR* and *VIR*) and the corresponding reliabilities (*ΣCR, ΣHIR* and *ΣVIR*) while taking into account the criteria, such as the extreme values and the change trends of the predicted signals in the time domain, and directly using these criteria or the derived new criteria to assess a comprehensive collision risk as the input of instructions of other specific application scenarios. The decision component may output the control instruction through fuzzy control, empirical calibration, logical judgement, etc.

As a specific example, the control instructions may be as follows: 0 indicates that no action is taken; 1 indicates a level 1 warning, for example, a visual warning; 2 indicates a level 2 warning, for example, an audible warning; 3 indicates a tactile warning, for example, to vibrate the seat belt; 4 indicates a pre-crash level 1 adjustment, for example, to tighten the safety belt with a small force; 5 indicates a pre-crash level 2 adjustment, for example, to tighten the safety belt with a medium force, while adjusting the seat position to a standard position (for example, zero gravity seat return); 6 indicates a pre-crash level 3 adjustment, for example, to tighten the safety belt with a large force, activate the pre-crash airbag, adjust the algorithm of the airbag controller, and adjust the threshold limit for airbag ignition, so as to fire the airbag in advance.

These criteria may also be used for route selection, driving risk assessment and accident rescue in an automatic driving scene.

A vehicle collision risk prediction method for predicting a vehicle collision risk using the vehicle collision risk prediction device of the present disclosure, includes the steps of:

step 1, inputting a comprehensive data set acquired by a perception component into a basic component, the comprehensive data set including human, environment and vehicle related information;

step 2, outputting, by the basic component, a collision risk *CR* and scene parameters of a collision based on the environment and vehicle related information, and obtaining state parameters of an occupant at a collision moment based on the human and vehicle related information;

step 3, outputting, by a prediction component, a vehicle injury risk *VIR* and a collision waveform according to the scene parameters of the collision, and determining a human injury risk *HIR* according to the collision waveform, the state parameters of the occupant at the collision moment and state parameters of a restraint system input by the perception component;

step 4, determining, by the prediction component, corresponding reliability criteria according to the scene parameters of the collision and expectation parameters including the collision risk *CR,* the human injury risk *HIR* and the vehicle injury risk *VIR,*

step 5, assessing, by the decision component, a comprehensive collision risk according to the acquired expectation parameters and the corresponding reliability criteria and based on criteria of extreme values and change trends of predicted signals in the time domain, and outputting a control instruction; and

step 6, according to a collision waveform recorded by an airbag controller, obtaining, by the prediction component, detailed vehicle and human injury conditions, and sending the detailed vehicle and human injury conditions to a cloud server via a wireless network, so as to notify relevant parties including at least one of maintenance, insurance and rescue.

The present disclosure has the following beneficial effects.

1. The driver operation uncertainty is considered, and the information about the occupant, the environment and the current vehicle is comprehensively considered, so that the collision risk and the injury risk possibly caused thereby, including the vehicle injury and the human injury, and the reliability criteria of the collision risk and the injury risk, are predicted in real time and accurately. According to the expectation parameters and the reliability criteria corresponding to the expectation parameters, a control instruction can be provided for each component of the occupant protection system in the pre-collision stage, and the pre-collision system is triggered in a leveled manner to, for a low-level risk, perform no action; for a moderate risk, give the occupant a warning such as tactile, audible, and visual warnings; for a high-level risk, to activate in advance the pre-collision safety system, such as a zero-gravity seat, a pre-collision airbag, etc., so as to extend occupant protection time and reduce the energy absorbed by the restraint system per unit of time.

2. The driver operation uncertainty is taken into account, and the reliability quantitative criteria of the prediction results of the collision risk and the injury risk are consider to assess the robustness and trend of the prediction results comprehensively, which may be applied to the leveled triggering of a pre-collision system to advance the time of occupant protection, so as to increase the perceived interactive experience of the user before the collision, and at the same time, by adjusting the explode strategy of the restraint system, the explode control accuracy of the conventional restraint system can be improved.

**Brief Description of the Drawings**

Fig. 1 is a schematic diagram of a vehicle collision risk prediction device according to the present disclosure.

Fig. 2 is a schematic diagram of a trajectory prediction module.

Fig. 3 is a graph defining a rebound moment.

Fig. 4 is a schematic diagram illustrating OLC calculation.

Fig. 5 is a schematic diagram of a vehicle injury prediction module.

Fig. 6 is a schematic diagram illustrating calculation of waveform characteristic values.

**Detailed Description of the Embodiments**

Embodiments of the of the present application will be described with reference to the accompanying drawings and preferred embodiments. Additional advantages and benefits of the present invention will become readily apparent to those skilled in the art from the present disclosure. The present disclosure may also be implemented or applied by other different specific embodiments, and various details in this specification may also be modified or changed without departing from the spirit of the present disclosure based on different viewpoints and applications. It is to be understood that the preferred embodiments are merely illustrative of the present disclosure and are not intended to limit the scope of the present disclosure.

It is be noted that the figures provided in the following embodiments merely illustrate the basic idea of the present disclosure in a schematic way, and thus only the components related to the present disclosure are shown in the figures rather than being drawn according to the numbers, shapes and sizes of the components in an actual implementation. In an actual implementation, the types, numbers and proportions of the components may be arbitrarily changed, and the layout of the components may be more complicated.

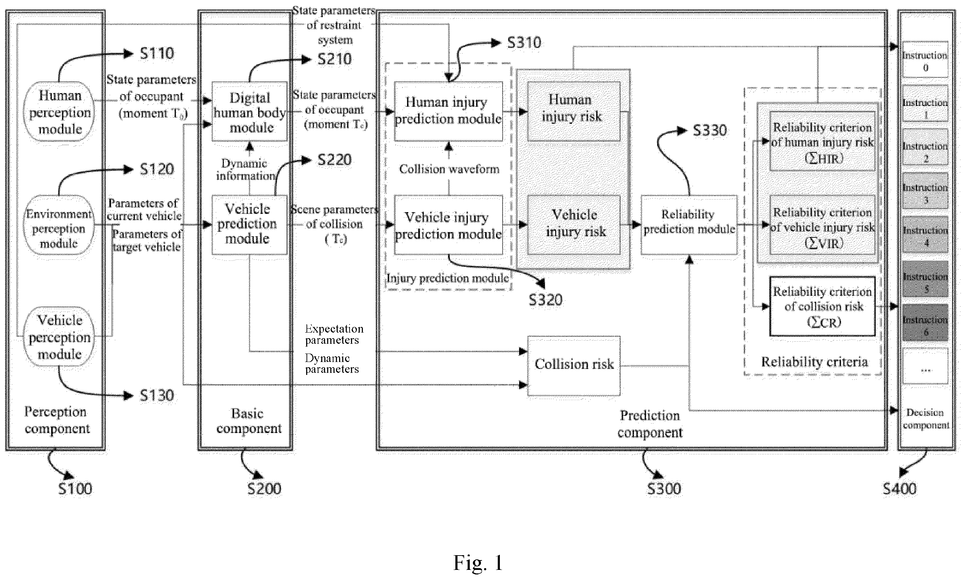

Referring to Fig. 1, a vehicle collision risk prediction device includes: a perception component S100, a basic component S200, a prediction component S300 and a decision component S400. The perception component is configured to acquire a comprehensive data set as an input to subsequent components. The comprehensive data set may include human, environment and vehicle related information. The perception component 5100 includes a human perception module S110, an environment perception module S120, and a vehicle perception module S130.

The human perception module S 110 is configured to acquire state parameters of an occupant in real time. The state parameters of the occupant are acquired by a camera and/or a TOF camera, and include basic parameters of the occupant and position parameters of the occupant. The basic parameters of the occupant include a height, a weight and an age of the occupant, the position parameters of the occupant include a sitting attitude of the occupant and a sitting position of the occupant, the sitting attitude of the occupant includes a recline angle and a leaning angle of the occupant, and the occupant sitting position refers to an absolute position of the occupant relative to the vehicle. The state parameters of the occupant are obtained by sensors such as a camera, a TOF camera and so on.

The environment perception module is configured to acquire parameters of a target object in real time. The parameters of the target object include a mass ($m_o$), dimensions ($l_o$, $w_o$, $h_o$), a type (type), and kinematic parameters of the target object. The kinematic parameters of the target object include a velocity $v_o$, an acceleration $a_o$, a yaw angle $\theta_o$ and a yaw rate $\omega_o$ of the target object. Among others, the mass $m_o$ cannot be acquired directly, and may be pre-estimated on the basis of the dimensions and type of the target object, and other parameters may be acquired via ADAS sensors, such as a laser radar, a camera, a millimeter-wave radar and so on.

The vehicle perception module S130 is configured to acquire parameters of a current vehicle and state parameters of a restraint system in real time. The parameters of the current vehicle include a mass ($m_e$), dimensions ($l_e$, $w_e$, $h_e$), and kinematic parameters of the current vehicle, in which the mass and dimensions are directly read from pre-stored values without acquisition, and the kinematic parameters of the current vehicle include a velocity $v_e$, an acceleration $a_e$, a yaw angle $\theta_e$ and a yaw rate $\omega_e$ of the current vehicle. The state parameters of the restraint system include whether to a safety belt is fastened, whether an air bag is exploded, etc. which may be obtained by a switch sensor, a collision sensor, etc.

The basic component S200 includes a digital human body module S210 and a vehicle prediction module S220. The digital human body module S210 is configured to predict the position parameters of the occupant from a current moment to a future moment according to the scene parameters of the scene that the occupant is currently in. For example, in a dangerous scene, during a braking or steering operation performed by a driver to avoid an accident, an occupant may be out of position with respect to a starting moment of the braking and/or steering due to a longitudinal and/or lateral acceleration field, and an attitude and a sitting position of the occupant. The vehicle prediction module S220 is capable of predicting the attitude and the seating position after the occupant is out of position. The scene parameters refer to the parameters of the current vehicle, the parameters of the target object, and dynamic parameters. The parameters of the current vehicle mainly include the kinematic parameters of the current vehicle, and the mass ($m_e$) and dimensions ($l_e,w_e,h_e$) of the current vehicle, and other information. The parameters of the target object refer to the kinematic parameters of the target object, and the type, mass and dimensions of the target object. The dynamic parameters refer to parameters calculated according to the kinematic parameters of the current vehicle and the target object, such as a time-to-collision *TTC* (Time To Collision), a vehicle time headway *THW*, a relative distance (*dis_rel*), a relative velocity (*v_rel*), etc. The *TTC* refers to a time when the current vehicle collides with the target object when the current vehicle travels at a current velocity and acceleration with the motion state of the target object unchanged. The time headway *THW* refers to a ratio of a distance from the current vehicle to the target object to the velocity of the vehicle.

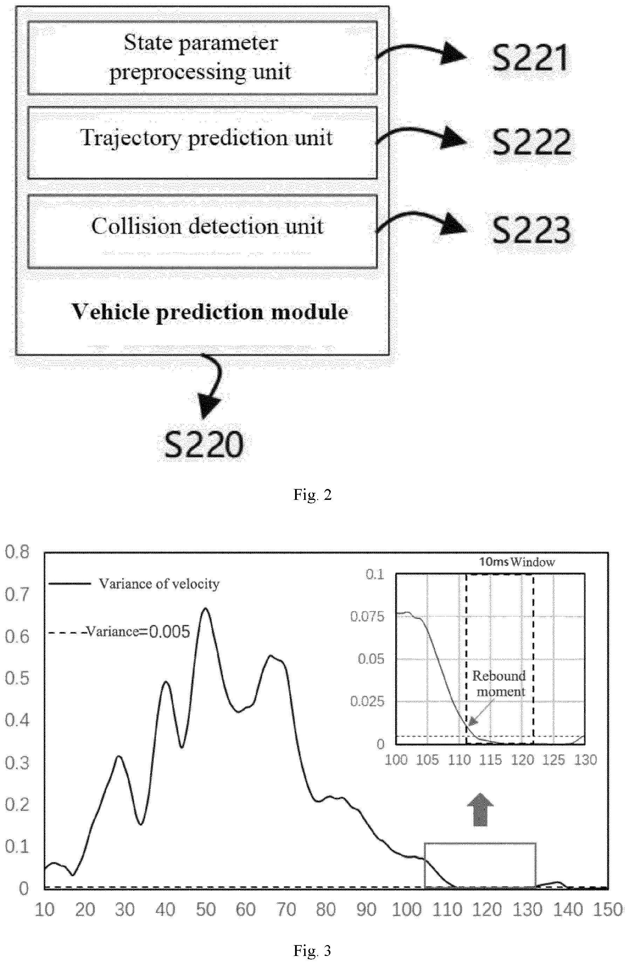

Referring to Fig. 2, the vehicle prediction module S220 includes a state parameter preprocessing unit S221, a trajectory prediction unit S222, and a collision detection unit S223.

The state parameter preprocessing unit S221 numbers and classifies a target object locked by the perception component specifically by: numbering the target object locked by the perception component, calculating a time-to-collision *TTC* of each target object, and sorting the target object in an ascending order according to the *TTC* of each target object; presetting a first time-to-collision threshold $TTC_{thres1}$ and a second time-to-collision threshold $TTC_{thres2}$, and if the time-to-collision *TTC* of a target object satisfies $TTC_{thres1} \le TTC \le TTC_{thres2}$, defining the target object as a potential dangerous target object, classifying the target object into a potential dangerous target object set, and continuously monitoring the motion state of the target object; and if the time-to-collision *TTC* of a target object satisfies $TTC < TTC_{thres1}$, defining the target object as a dangerous target object, and classifying the target object into a dangerous target object set.

The trajectory prediction unit S222 corrects the motion state of the target object in the potentially dangerous target object set, and predicts travel trajectories of the current vehicle and the target object in the dangerous target object set within a preset time range ($TTC_{thres1}$) using the kinematic or dynamic model. The trajectory prediction may predict the future travel trajectory of the vehicle based on the scene parameters at the current moment through a kinematic/dynamic model. The motion state may be corrected by an extended Kalman filter (EKF), or another vehicle trajectory correction method, in order to improve the accuracy of the perceived information within a certain range. The kinematic model may be: a constant turn rate and acceleration (CTRA) model, a constant acceleration (CA) model (if the measurement of the yaw rate is zero or no valid record) or a constant velocity (CV) model (if both the acceleration and yaw rate measurements are zero or no valid record). The kinematic model used in this embodiment is CTRA. The kinematic model is adopted because of its high calculation speed, and due to the extreme time in the dangerous scene and limited operation space of the driver, the accuracy of the kinematic model is comparable to that of a dynamic model. It is noted that the trajectory prediction unit S222 also may be replaced by a kinematic model.

The collision detection unit S223 is configured to detect whether a collision occurs between the current vehicle and the target object at a specific moment, and if the current vehicle comes into contact in space with the target object, define such contact as a collision and the moment as a collision moment $T_c$ with the collision risk $CR = 1$, and record the scene parameters of the collision at the moment $T_c$, the scene parameters of the collision including the velocity $v_{e\_c}$ of the current vehicle, the velocity $v_{o\_c}$ of the target object, a collision overlap ratio $\delta$, a collision angle $\gamma$, the mass $m_o$ of the target object, and the type *type* of the target object; and if no contact is detected, $CR = 0$, $CR \in \{0,1\}$.

The detection of the collision detection unit includes a rough detection stage and a detailed detection stage. The rough detection includes: calculating a distance $L_i$ between a geometric center of the current vehicle and a geometric center of the target object, and calculating respective minimum enveloping circles of the current vehicle and the target object with the centers of the enveloping circles locating at the respective geometric centers of the current vehicle and the target object, and when the enveloping circle of the current vehicle is tangent to the enveloping circle of target object, recording the distance between the geometric centers of the current vehicle and the target object as $L_{crit}$.

If $L_i < \alpha L_{crit}$, the detailed detection is performed, $a$ being a gain coefficient. The detailed detection is performed to detect whether there is an overlap or not in space between the current vehicle and the target object, and if there is an overlap, such overlap is defined as a contact, and the detailed detection is performed specifically using a separating axis theorem (STA) method or a Gibert-Johnson-Keerthi (GJK) method.

The prediction component S300 includes a human injury prediction module S310, a vehicle injury prediction module S320, and a reliability prediction module S330.

The human injury prediction module (Human Injury Risk Model, HIRM) S310 is configured to predict an injury curve of the occupant after a hypothetical collision in real time according to a collision waveform, the state parameters of the occupant and the state parameters of the restraint system when the current vehicle has a collision, and calculate a human injury risk *HIR* according to the injury curve. The human injury prediction module is an off-line human injury prediction model that is trained on the basis of an injury data set.

The human injury prediction module is built on-line, including the following steps.

SH1: Construction of a human injury database. Firstly, a human injury matrix table is generated by randomly sampling in a space formed by collision waveforms, occupant information, and restraint system state information. The collision waveforms refer to acceleration curves in the X, Y and Z directions of the current vehicle and rotational displacement curves around the X, Y and Z axes in a whole vehicle coordinate system during a collision, which are all time process curves and obtained from a vehicle injury database. Then, a high-precision restraint system model is built, which is a finite element model or a multi-rigid-body model. Numerical simulation calculation is performed according to the human injury matrix table, and a human body injury curve is extracted from the calculation result, so as to obtain a human body injury database with the collision waveform, the state parameters of the occupant and the state parameter of the restraint system as the input (feature), and injury curves of various part of the human body as the output (label). The injury curves of various parts of the human body refer to a head acceleration curve, a neck axial force curve, a neck bending moment curve, a neck injury criterion curve, a chest compression amount curve, a chest acceleration curve, a femur axial force curve, a tibia axial force curve, a tibia shear force curve, and tibia bending moment curves around the x axis and the y axis.

SH2: Manual feature extraction. The manual feature extraction is to, based on human experience in studying injuries, calculate parameters affecting injuries to the human body according to the collision waveform, the parameters including but not limited to: a vehicle collision velocity $v_{e\_c}$, a rebound moment $t_{rebound}$, collision energy $E = \frac{1}{2}mv^2$, maximum accelerations $a_{x\_max}$, $a_{y\_max}$, $a_{z\_max}$ in the X, Y and Z directions, mean accelerations $a_{x\_mean}$, $a_{y\_mean}$, $a_{z\_mean}$ in the X, Y and Z directions, maximum rotational displacements $d_{x\_max}$, $d_{y\_max}$, $d_{z\_max}$ around the X, Y and Z axes, a mean sliding window acceleration $SM_W$, an occupant load criterion *OLC,* and an e acceleration severity index *ASI.* In implementations, if the acceleration curves in the Y and Z directions and the rotational displacement curves about the Y and Z axes are not available, the characteristic values may not include one or more of $a_{y\_max}$, $a_{z\_max}$, $a_{y\_mean}$, $a_{z\_mean}$, $d_{y\_max}$, $d_{z\_max}$. The collision waveforms refer to acceleration curves in the X, Y and Z directions of the current vehicle and rotational displacement curves around the X, Y and Z axes in a whole vehicle coordinate system during a collision, which are all time process curves.

The vehicle collision velocity $v_{e\_c}$ refers to the velocity of the current vehicle at a collision moment $T_c$, and is obtained by the vehicle injury prediction module, and a collision velocity curve v(t) is obtained by integrating a collision acceleration curve in the X direction obtained by the vehicle injury prediction module.

A change in velocity $\Delta v$ is a difference between $v_{e\_c}$ and the velocity $v_{e\_end}$ of the current vehicle at an ending moment $T_{end}$ of the collision, $v_{e\_end} = v(t)_{t=Tend}$.

The rebound time $t_{rebound}$ refers to a time when the direction of the velocity of the current vehicle is reversed. As shown in Fig. 3, if the direction of the velocity is not reversed after the collision of the vehicle, i.e., the velocity is not returned to zero, a variance of 10 consecutive sampling points of the velocity of the vehicle (sampling the velocity curve with an interval of 1 ms) can be calculated to obtain a velocity variance curve. If the variance of the 10 consecutive points on the velocity variance curve (defining a time interval corresponding to the 10 points as [*t, t* + 10] ms) is less than a threshold $\theta$, the rebound moment $t_{rebound} = t + 5\ ms$, and $\theta$ may be 0.005.

The collision energy is

$$E = \frac{1}{2}m_e v_{e\_c}^2.$$

The maximum acceleration in the X direction is $a_{x\_max} = max(abs(a_x(t)))$, and $a_{y\text{-}max}$ and $a_{z\_max}$ can be solved similarly.

The mean acceleration is the X direction is $a_{x\_mean} = \frac{1}{T}\int_{t=0}^{t=T} a_x(t)dt$, and $a_{y\_mean}$ and $a_{z\_mean}$ can be solved similarly.

The maximum rotational displacement about the X axis is $d_{x\_max} = max(abs(d_x(t)))$, and $d_{y\_max}$ and $d_{z\_max}$ can be solved similarly.

$$SM_W = \max_{x \in T}(\frac{1}{W}\int_{x-\frac{1}{2}W}^{x+\frac{1}{2}W} a_x(t)\,dt)$$

The mean sliding window acceleration , where $W$ represents the width of the sliding window, typically 3 ms.

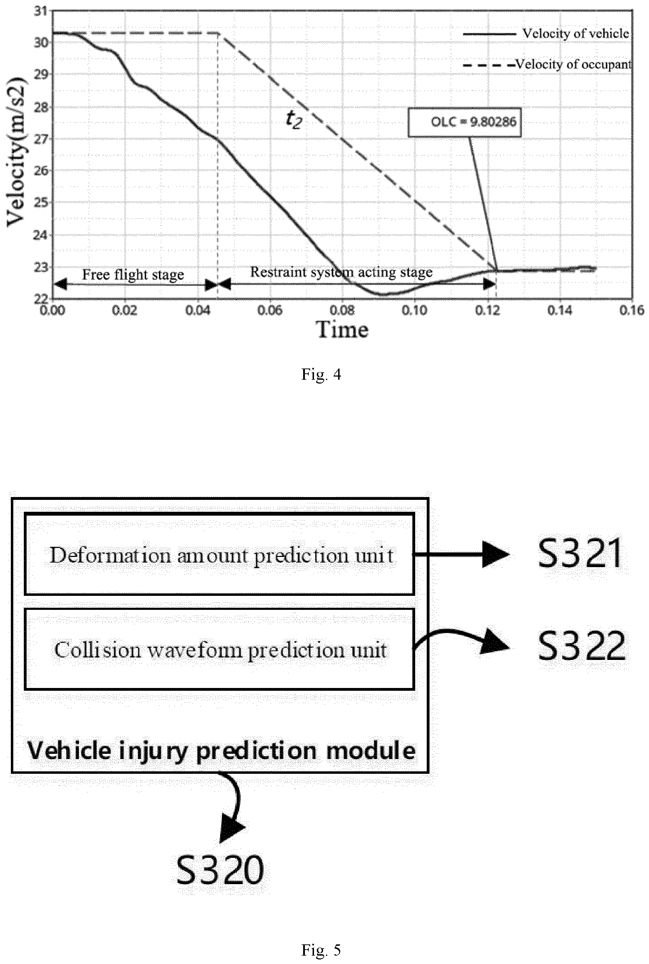

The occupant load criterion OLC is proposed by Dr. Kübler As shown in Fig. 4, the human body is not restrained by the restraint system in an initial stage of the collision (free flight stage), and moves freely to a moment $t_1$ with a distances. Thereafter, the restraint system starts to act, and the human body moves at a constant deceleration d - s. In this stage, the restraint system acts, and the change in velocity is the value of OLC. Typically, d is a distance between the occupant's chest and the steering wheel (dashboard) in the X direction, and s is 60 mm. The OLC is solved iteratively as follows.

$$\int_{t=0}^{t=t_1} v_{e\_c}\,dt - \int_{t=0}^{t=t_1} v(t)\,dt = s,$$

$$\int_{t=0}^{t=t_1}(v_{e\_c} - OLC \cdot (t - t_1)dt) - \int_{t=t_1}^{t=t_2} v(t)\,dt = d - s,$$

$$v_{e\_c} - OLC \cdot (t_2 - t_1) = v(t_2),$$

where $v_{e\_c}$ is the initial collision velocity, and v(t) is a collision velocity curve.

The acceleration severity index *ASI* is calculated as:
$$ASI = \sqrt{(\frac{SM_{50ms,x}}{12})^2 + (\frac{SM_{50ms,y}}{9})^2 + (\frac{SM_{50ms,z}}{10})^2}$$
,
where $SM_{50ms,x}$ $SM_{50ms,y}$ $SM_{50ms,z}$ represent mean accelerations of a 50 ms sliding window in the X, Y and Z directions of the vehicle, respectively.

SH3: Construction and training of the human injury prediction model. The human injury prediction model is constructed based on an encoder-decoder architecture, and the encoder fuses the manually extracted features and the automatically extracted features of the machine. In particular, the encoder may be implemented in two ways: the encoder is composed of a scalar processing module, a vector processing module and a scalar/vector fusion module; the vector processing module maps an original collision waveform to a vector implicit state, and may be implemented by 1D convolution + pooling or RNN unit; the scalar processing module maps a scalar value to a scalar implicit state, and may be a structural unit such as a multi-layer MLP; and the fusion module splices the vector implicit state and the scalar implicit state, and completes fusion by transpose convolution; the scalar inputs and vector inputs may also be represented by embedding, and the embedding outputs of all scalars and vectors are added, and then features are extracted using a time series model such as TCN and RNN; the decoder is responsible for mapping the fused features of the encoder to human injury values, using the MLP structure. After the model is constructed, the model is initialized and trained until the accuracy meets the requirements.

SH4: Real-time prediction. According to a collision waveform, the state parameters of the occupant and the state parameters of the restraint system which are obtained in real time, the manually extracted features calculated in SH2 are input into the artificial characteristic parameter into the pre-trained human injury prediction model, so as to obtain injury curves of various parts of the occupant, and calculating a human injury risk *HIR* is calculated according to a human injury risk function of various parts of the occupant defined by NHTSA, $HIR \in [0,1]$:

$$HIR_C = 1 - (1 - P_{head}) * (1 - P_{neck}) * (1 - P_{chest}) * (1 - P_{femur}) * (1 - P_{tibia});$$

where $p_{head}$, $p_{neck}$, $p_{chest}$, $p_{femur}$, $p_{tibia}$ represent injury risks of the head, neck, chest, femur and tibia parts, respectively.

Take the head as an example (the calculation of the injury risk of other parts is similar), the injury risk $p_{head}$ is calculated, and calculate the injury criterion *HIC* of the head is calculated according to a predicted head acceleration curve:

$$HIC_{t_2-t_1} = \max_{t_0 \le t_1 \le t_2 \le t_T}\left[(t_2 - t_1)\left(\frac{1}{t_2-t_1}\int_{t_1}^{t_2} a_g(t)dt\right)^{2.5}\right],$$

where $a_g(t)$ is the center-of-mass acceleration of the the head of the occupant at the collision moment $t$, in units of gravitational acceleration $g$; $t_0$ and $t_T$ are the starting and ending moments of the collision, respectively; the collision

moment $t_1$ and the collision moment $t_2$ are a starting time and an ending time for calculating HIC, respectively, and the difference between $t_1$ and $t_2$ is less than a preset threshold, for example, the preset threshold may be 15 ms, i.e., $t_2 - t_1$ is less than 15 ms.

A head AIS3 injury risk curve is:

$$p_{head} = p\left(AIS_{head} \geq 3\right) = \Phi\left(\frac{ln(HIC_{15}) - 7.45231}{0.73998}\right)$$

, where $\Phi$ represents a cumulative normal distribution.

The injury criterion expresses a quantified value of injuries to a certain part, while one part may be characterized by a plurality of injury criteria, and the maximum in the injury risks corresponding to the plurality of injury criteria is taken for calculating the injury risk of the part.

Referring to Fig. 5, the vehicle injury prediction module S320 includes a deformation amount prediction unit S321 for predicting a vehicle injury risk after a hypothetical collision in real time according to the scene parameters of the collision at a collision moment, and a collision waveform prediction unit S322 for predicting a collision waveform after a hypothetical collision according to the scene parameters of the collision, the predicted collision waveform being used as one of inputs of the human injury prediction module.

The deformation amount prediction unit S321 predicts the injury risk $VIR$ of the vehicle after a hypothetical collision in real time according to the scene parameters of the collision at the moment $T_c$, and is an off-line deformation amount prediction model trained on the basis of a vehicle injury data set.

The deformation amount prediction model is constructed on-line, including three steps: SD1: construction of a vehicle injury database, SD2: construction and training of the deformation amount prediction model, and SD3: real-time prediction.

SD1: Construction of a vehicle injury database. Firstly, the scene parameters affecting the collision waveform and the boundaries of these scene parameters are determined. The boundaries of the scene parameters can be determined by analyzing a traffic accident database, and a vehicle injury matrix table is generated by randomly sampling in a space formed by the scene parameters. Then, a high-precision whole vehicle finite element model is established, and the whole vehicle model is updated according to the vehicle injury matrix table and subjected to numerical simulation. Finally, the deformation amount of the vehicle and the collision waveform are extracted from the simulation results, and eigenvalues $F1_{true}$ and $F2_{true}$ are calculated according to the collision waveform, so as to construct a database with the scene parameters as the input (feature) and the vehicle deformation and waveform eigenvalues as the output (label).

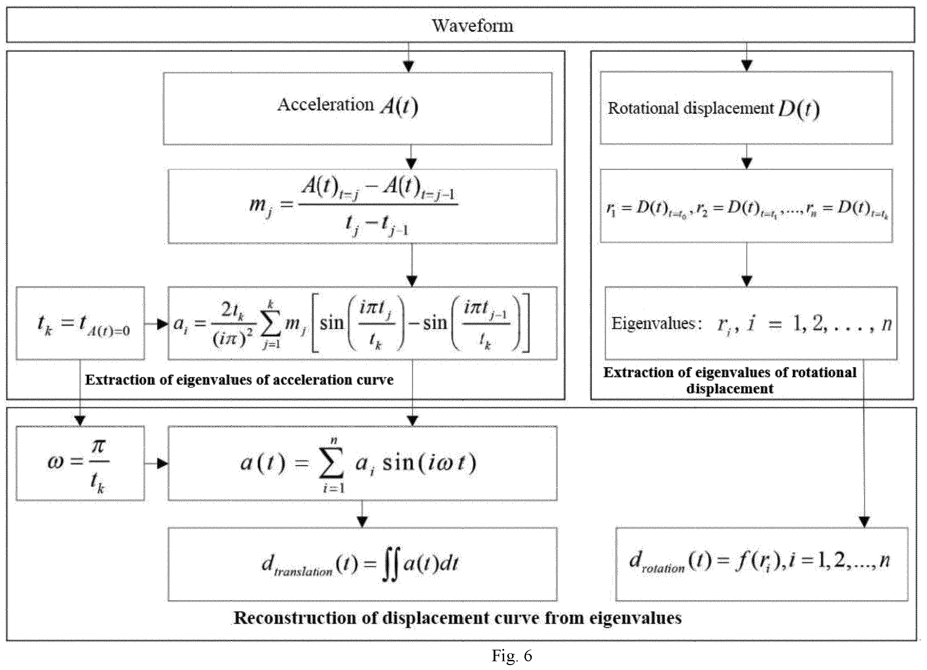

The waveform eigenvalues mean that a waveform is simplified into an approximate waveform, and the eigenvalues are the only parameters for determining the simplified waveform. The methods for simplifying the waveform may use a half sine wave, a second-order square wave, a trapezoidal wave, a Fourier waveform, etc. A specific example is given below, see Fig. 6.

It is divided into two parts, in which the first part is to extract the eigenvalues of true acceleration curves in the X, Y and Z directions, and the second part is to extract the eigenvalues of true rotational displacement curves around X, Y and Z axes.

1. Extraction of eigenvalues of acceleration curves. There are many small peaks/troughs in the acceleration curve. According to the Fourier theory, any waveform can be obtained through the superposition of multiple sine waves, and these multiple sine waves are unique. In order to better fit the trend of the acceleration curve, the Fourier equivalent method is used. Taking the X direction as an example (the extraction of eigenvalues in the Y and Z directions is similar to that in the X direction), a true acceleration curve $A(t)$ is obtained from the finite element calculation results, and the slope $m_j$ between adjacent points $(t_{j-1}, A(t)_{t=j-1})$ and $(t_j, A(t)_{t=j})$ is calculated:

$$m_j = \frac{A_{t=j} - A_{t=j-1}}{t_j - t_{j-1}}.$$

The effective duration of the collision $t_k$ is calculated, $t_k = t_{A(t)=0}$, i.e., the moment at which the acceleration curve returns to zero after the time zero.

The i-th eigenvalue $a_i$ is calculated from $m_j$ and $t_k$:

$$a_i = \frac{2t_k}{(i\pi)^2} \sum_{j=1}^{k} m_j \left[\sin\left(\frac{i\pi t_j}{t_k}\right) - \sin\left(\frac{i\pi t_{j-1}}{t_k}\right)\right],$$

where k is the total number of discrete points contained in the original waveform curve, and the natural angular

frequency $\omega = \frac{\pi}{t_k}$ is calculated.

Finally, the acceleration curve is reconstructed, and substituted with $a_i$ and $\omega$, $a(t) = \sum_{i=1}^{n} a_i \sin(i\omega t)$.
The eigenvalues of the acceleration waveforms in the X, Y and Z are represented as:

$$F1_{true} = \left[ a_{x1}, a_{x2}, \ldots, a_{xn}, a_{y1}, a_{y2}, \ldots, a_{yn}, a_{z1}, a_{z2}, \ldots, a_{zn} \right].$$

2. Extraction of eigenvalues of rotational displacement curves. The rotational displacement curves increase monotonically during a collision, or there is only a single peak, rather than multiple peaks like the acceleration waveforms, because the effective time-to-collision is usually short (about 150 ms), and the vehicle generally moves in one direction around an axis. Therefore, the original curve can be well characterized by directly taking points on the original curve for the rotational displacement curve. Taking the X direction as an example (the extraction of the eigenvalues in the Y and Z directions is similar to that in the X direction), D(t) is a true rotational displacement curve in the X direction, and the eigenvalues thereof are directly taken from points on the original curve. $n$ points are taken to characterize the original curve. The rotational displacement values corresponding to the moments $t_0$ and $t_k$ on the original curve are taken for the first point and the last point, respectively, $t_0 = 0$, and other n - 2 points are taken from corresponding points on the original curve at equal time intervals $\left( t_0, t_{1 * \frac{t_k}{(n-1)}}, t_{\frac{2 * t_k}{(n-1)}}, \ldots, t_k \right)$, so as to obtain the eigenvalues $r_{x1}, r_{x2}, \ldots, r_{xn}$. Similarly, the eigenvalues in the Y and Z directions $r_{y1}, r_{y2}, \ldots, r_{yn}$ and $r_{z1}, r_{z2}, \ldots, r_{zn}$ can be obtained, and a vector $[r_{x1}, r_{x2}, \ldots, r_{xn}, r_{y1}, r_{y2}, \ldots, r_{yn}, r_{z1}, r_{z2}, \ldots, r_{zn}]$ formed by these eigenvalues is represented as $F2_{true}$.

The eigenvalues of the rotational displacement curves in the X, Y and Z directions are represented as:

$$F2_{true} = \left[ r_{x1}, r_{x2}, \ldots, r_{xn}, r_{y1}, r_{y2}, \ldots, r_{yn}, r_{z1}, r_{z2}, \ldots, r_{zn} \right].$$

SD2: Construction and training of the deformation amount prediction model. A training sample with scene parameters as the input (feature) and a vehicle deformation amount as the output (label) is used for model training. The model may use machine learning integration algorithms such as random forests and XGBOOST, or neural network algorithms such as multi-layer perceptron, CNN and RNN.

SD3: Real-time prediction. The scene parameters are obtained in real time, and input into the off-line pre-trained deformation amount prediction model to obtain a predicted deformation amount, and a relative deformation amount, namely, a ratio of the deformation amount of the vehicle to the size of the vehicle, is calculated. The deformation of the vehicle is decomposed into a longitudinal component, a transverse component and a vertical component, and the maximum in the relative deformations of the transverse direction, the longitudinal direction and the vertical direction is taken as the relative deformation, $VIR \in [0,1]$.

The collision waveform prediction unit S322 predicts a collision waveform of the vehicle after a hypothetical collision in real time according to the scene parameters of the collision at the collision moment $T_c$, and is an off-line waveform prediction model trained on the basis of a vehicle injury data set.

The waveform prediction model is constructed on-line, including three steps: SP1: construction of a vehicle injury database, SP2: construction and training of the waveform prediction model, and SP3: real-time prediction.

SP1: Construction of a vehicle injury database. This is step has been completed in SD1.

SP2: Construction and training of the waveform prediction model. A training sample with scene parameters as the input (feature) and waveform eigenvalues as the output (label) is used for model training, and the model may use the methods described in SD2.

SP3: Real-time prediction. Eigenvalues $F1_{pre}$ and $F2_{pre}$ are predicted according to the scene parameters of the collision, and a predicted collision waveform is obtained according to the predicted eigenvalues. Taking the acceleration curve in the X direction as an example (similarly for the Y and Z directions), the front n eigenvalues of $F1_{pre}$ are taken, and the acceleration curve in the X direction is obtained according to $a(t) = \sum_{i=1}^{n} a_i \sin(i\omega t)$; the front n eigenvalues of $F2_{pre}$ are taken to construct the ordinate of the rotational displacement curve around the X axis, and the corresponding abscissa is $\left(t_0, t_{1*\frac{t_k}{(n-1)}}, t_{2*\frac{t_k}{(n-1)}}, \ldots, t_k\right)$, forming the rotational displacement curve in the X direction.

The reliability prediction module S330 is configured to predict reliability criteria $\Sigma CR, \Sigma HIR, \Sigma VIR$ of expectation parameters including a collision risk $CR$, a human injury risk HIR and a vehicle injury risk $VIR$ according to the scene parameters and the expectation parameters $CR$, $HIR$, and $VIR$ when a hypothetical collision occurs. The decision component is configured to acquire the expectation parameters $CR$, $HIR$ and $VIR$ and the corresponding reliability criteria $\Sigma CR, \Sigma HIR, \Sigma VIR$ of $CR$, $HIR$ and $VIR$, assess a comprehensive collision risk while taking into account criteria of extreme values and change trends of predicted signals in the time domain, and output a control instruction.

The reliability prediction module S330 is an off-line reliability prediction model which is trained on the basis of a reliability quantitative criterion database, wherein the reliability quantitative criterion database refers to a database which is input with the scene parameters and the expectation parameters and outputs reliability criteria of the current scene.

The reliability criteria are the degrees of credibility of $CR$, $HIR$ and $VIR$ while taking into account the driver's reaction to the running state of the current vehicle, i.e., taking into account the driver operation uncertainty at the current moment. The trajectory prediction module does not take into account the driver operation uncertainty, and after statistical analysis of traffic accidents, most drivers in a dangerous scene are not able to perform an effective avoidance operation in a very short time, and usually there is no operation before a collision, and the vehicle travel trajectory only evolves in time from an initial state. Such trajectory is defined as a presumptive true-trajectory, that is to say, the travel trajectory of the vehicle predicted by the trajectory prediction module is the travel trajectory most likely to occur, and therefore the collision risk $CR$, the human injury risk $HIR$, and the vehicle injury risk $VIR$ predicted at the moment $T_c$ are expected risks, so $CR, HIR$, $VIR$ are described as expectation parameters, and $\Sigma CR, \Sigma HIR$ and $\Sigma VIR$ characterize the deviation degrees of different operation behaviors from the expected $CR$, $HIR$ and $VIR$, namely, reliability criteria.

The reliability prediction model is constructed on-line, including three steps: SR1: construction of the reliability quantitative criterion database, SR2: construction and training of the reliability prediction model, and SR3: real-time prediction.

SR1: Construction of the reliability quantitative criterion database. The reliability quantitative criterion database is a database with the scene parameters and the expectation parameters ($CR$, $HIR$ and $VIR$) as the input (feature) and the reliability criteria ($\Sigma CR, \Sigma HIR$ and $\Sigma VIR$) in the current scene as the output (label).

The construction method is as follows. 1. A driver operation behavior database is constructed. For a scene in which a collision may occur, a driver operation behavior (braking, acceleration or steering) is simplified into longitudinal and lateral movements of the vehicle which are characterized by a longitudinal acceleration $a$ and a yaw rate $\omega$. The $a$ and $\omega$ are discretized if the physical conditions permit, and a driving behavior database with the scene parameters as the input and $a$ and $\omega$ as the output is constructed. 2. The driver operation uncertainty is quantitatively characterized according to the driver operation behavior database. 3. For each group of specific scene parameters, on the basis of the presumptive true-trajectory, a large number of possible vehicle trajectories are generated by taking into account the random state caused by the driver operation behavior for each discrete moment (the time range $T$ for prediction is discretized into N values, $T = [T_0, T_1, \ldots, T_{N-1}]$, $T_{N-1} = TTC_{thres1}$). The collision risk $CR_{k\_r}$, the human injury risk $HIR_{k\_r}$ and the vehicle injury risk $VIR_{k\_r}$ of each travel trajectory colliding with the k-th dangerous target object are obtained according to the vehicle prediction model, the human injury prediction model and the vehicle injury prediction model. 4. The reliability quantitative criteria $\Sigma CR_k, \Sigma HIR_k, \Sigma VIR_k$ corresponding to the original collision risk $CR_{k\_r}, HIR_{k\_r}, VIR_{k\_r}$ under the group of specific scene parameters are calculated, and similarly, the reliability quantitative criteria under all the scene parameters are calculated, so as to complete the construction of the driver operation uncertainty database.

The reliability quantitative criteria are calculated by: according to the scene parameters and the expectation parameters at the current moment, while considering driver operation uncertainty, setting $U$ discrete values of the driver operation uncertainty corresponds to $U$ different driving trajectories, and obtaining $U$ different vehicle collision risk prediction results, $U$ human injury risk prediction results and $U$ vehicle injury risk prediction results according to the vehicle prediction module, the human injury prediction module and the vehicle injury prediction module, respectively, represented as:

$[(CR_{k\_1}, HIR_{k\_1}, VIR_{k\_1}), (CR_{k\_2}, HIR_{k\_2}, VIR_{k\_2}), \ldots, (CR_{k\_U}, HIR_{k\_U}, VIR_{k\_U})]$, then, statistically, the reliability quantitative criteria of the k-th target object can be represented as:

$$\begin{cases} \sum CR_k = \frac{1}{U}\sum_{r=1}^{U}\left(CR_{k\_r} - CR_k\right)^2 \\ \sum HIR_k = \frac{1}{U}\sum_{r=1}^{U}\left(HIR_{k\_r} - HIR_k\right)^2 \\ \sum VIR_k = \frac{1}{U}\sum_{r=1}^{U}\left(VIR_{k\_r} - VIR_k\right)^2 \end{cases}.$$

The smaller the $\Sigma CR$ is, the more accurate the *CR* is and more likely to occur, otherwise, the greater the $\Sigma CR$ is, the more unstable the *CR* is when the driver makes an operation for intervention and less likely to occur. The *ΣHIR* and *ΣVIR* may be interpreted similarly, i.e., the smaller the $\Sigma HIR$ is, the more accurate the *HIR* is and more likely to occur, otherwise, the greater the $\Sigma HIR$ is, the more unstable the *HIR* is when the driver makes an operation for intervention and less likely to occur; the smaller the $\Sigma VIR$ is, the more accurate the *VIR* is and more likely to occur, otherwise, the greater the $\Sigma VIR$ is, the more unstable the *VIR* is when the driver makes an operation for intervention and less likely to occur.

The driver operation uncertainty is quantitatively characterized by (taking the current vehicle as an example, and the characterization of the target object is similar): firstly, discretizing, if physical conditions permit, the acceleration *a* and the yaw rate *ω* in the driver operation behavior database, assuming $\zeta$ discrete values for the acceleration *a* and $\eta$ discrete values for the yaw rate *ω*, i.e., $a = [a_1, a_2, ... , a_\zeta]$, $\omega = [\omega_1, \omega_1, ... , \omega_\eta]$, and then establishing a driver operation behavior posteriori model and generating different trajectories in the following three methods.

Method A: The acceleration *a* and the yaw rate *ω* are assumed to follow a uniform distribution $\mathbb{P}(\bar{a}), \mathbb{P}(\bar{\omega})$, i.e., the probability that the driver takes a certain action at any time is equal, independent of the scene parameters. During trajectory generation, at each discrete moment, $\zeta \times \eta$ different operation behaviors can be obtained according to a $\mathbb{P}(\bar{a})$和$\mathbb{P}(\bar{\omega})$ probability model, and finally $(\zeta \times \eta)^N$ different trajectory curves can be obtained.

Method B: The acceleration *a* and the yaw rate *ω* are assumed to be related to the scene parameters (*S*), and a driver operation posteriori model of the acceleration *a*, the yaw rate *ω* and the scene parameters is established: $a, \omega = f(S)$. The *f* may be a time sequence model such as the hidden Markov model (HMM), RNN, etc.

Method C: A normal distribution probability model for *a* and *ω* is established:

$$\mathbb{P}\big(\bar{a}|\Delta l(T_i), \Delta v(T_i), \Delta\theta(T_i), \phi(T_i)\big) \sim \mathcal{N}\big(\bar{\mu}_a(\Delta l, \Delta v, \Delta\theta, \phi|T_i), \bar{\sigma}_a^2(\Delta l, \Delta v, \Delta\theta, \phi|T_i)\big),$$

$$\mathbb{P}\big(\bar{\omega}|\Delta l(T_i), \Delta v(T_i), \Delta\theta(T_i), \phi(T_i)\big) \sim \mathcal{N}\big(\bar{\mu}_a(\Delta l, \Delta v, \Delta\theta, \phi|T_i), \bar{\sigma}_a^2(\Delta l, \Delta v, \Delta\theta, \phi|T_i)\big).$$

Assuming that the acceleration *a* and the yaw rate *ω* are independent of each other, a fused normal distribution probability model can be established:

$$\mathcal{N}\left(\begin{bmatrix}\bar{\mu}_a\\\bar{\mu}_\omega\end{bmatrix}, \begin{bmatrix}\bar{\sigma}_a^2 & 0\\0 & \bar{\sigma}_\omega^2\end{bmatrix}\right)$$

The kinematic model is substituted with $\overline{\mu}_a, \overline{\mu}_\omega$ to obtain a travel trajectory of "mean" driver operations during a time period $[T_i, T_{i+1}]$, and the probability distribution of the vehicle state at the moment $T_{i+1}$ (the probability distribution characterizing the vehicle state at the moment $T_{i+1}$ resulting from the change caused by different driver operations) is obtained, and then random unbiased point scattering is performed within the vehicle state distribution based on the "$6\sigma$ principle", each point representing a different vehicle state at the moment $T_{i+1}$. By analogy, the probability distribution of the vehicle state at the current moment is calculated at each discrete moment, and random point scattering is performed until the moment $T_N$. If point scattering is performed for $\xi$ times at each discrete moment, at maximum $\xi^N$ trajectories are finally obtained.

The method A simplifies the driver operation probability model by ignoring the change in time without considering the influence of different driving states on the driver operation; on the basis of the method A, the method B takes into account the influence of the driving state on the driver operation, and establishes a posteriori model of the driver operation with the environment parameters as hidden state variables; in the method C, on the basis of the method B, a probability model is established for the driver operation, and trajectory recursion calculation is performed using a parameterized form of the probability model. The methods A and B must recursively calculate the state of the next moment for each trajectory sample at each discrete time, and the computational complexity can be simply represented as: $O(\xi^N \eta^N)$. However, the computational complexity of method C can be represented as $O(\xi^N)$.

SR2: Construction and training of the reliability prediction model. A training sample with the scene parameters and expectation parameters (*CR, HIR* and *VIR*) as the input and the reliability criteria ($\Sigma CR$, $\Sigma HIR$ and $\Sigma VIR$) as the output (label) is used for model training, and the model may use the methods described in SD2.

SR3: Real-time prediction. The scene parameters obtained by the perception component and the expectation parameters (*CR, HIR* and *VIR*) predicted by the vehicle prediction module, the human injury prediction module and the vehicle injury prediction module are input into the pre-trained off-line reliability prediction model, so as to obtain the

predicted reliability criteria ($\Sigma CR$, $\Sigma HIR$ and $\Sigma VIR$).

The decision component S400 outputs a control instruction by means of fuzzy control, empirical calibration or logic judgement, namely, on the basis of the above-mentioned safety criteria, and taking into account the criteria, such as extreme values and change trends of predicted signals in the time domain, the collision risk is assessed comprehensively. Thus, based on empirical rules and experimental calibration, an assessment signal can be output in a fuzzy form, including but not limited to a series of evaluations such as "safe", "medium probability collision, medium injury", "high probability collision, severe injury", and so on, constituting an assessment fuzzy set. Thus, the fuzzy logic control process is established, and the description signal of the collision risk assessment is finally output, and the output signal should also include the description of the position and orientation of the corresponding locked target object. An example, in which the prediction results of the k-th target object are $(CR_k, HIR_k, VIR_k)$, $(\Sigma CR_k, \Sigma HIR_k, \Sigma VIR_k)$ and the control method is logical judgment, is described as follows.

First, $HIR_k$ and $VIR_k$ and their reliability criteria $\Sigma HIR_k$ and are $\Sigma VIR_k$ weighted to obtain a comprehensive loss risk criterion $IR_k$:

$$IR_k = w_h * (HIR_k * \sum HIR_k) + w_v * (VIR_k * \sum VIR_k),$$

where $w_h$, $w_v$ are weights of the human injury and the vehicle injury, respectively, $w_h$, $w_v \in [0,1]$, $w_h + w_v = 1$. The specific values of $w_h$, $w_v$ may be determined empirically, and if more attention is paid to the human injury, a greater weight is given to $w_h$; and if more attention is paid to the vehicle injury, a greater weight is given to $w_v$. The former is used for situations with occupants in the vehicle, while the latter is used for automatically driving vehicles without occupants in the vehicle to reduce the vehicle injury.

Then, considering the robustness in the time domain, successive $M$ predicted signals of $CR_k$ are monitored, $(CR_{k,1}, CR_{k,2}, ..., CR_{k,M})$, and their variance $\sigma^2_{\mathrm{CR}_k}$ is calculated.

A threshold $\sigma^2_{\mathrm{CR}_{k\,thres}}$ is preset; thresholds $IR_{thres1}$ and $IR_{thres2}$ are set, and when $IR > IR_{thres2}$, the level of $IR$ is defined as 0, and when $IR_{thres1} \le IR \le IR_{thres2}$, the level of IR is defined as 1, and when $IR < IR_{thres1}$, the level of IR is defined as 2; thresholds $\Sigma CR_{thres1}$ and $\Sigma CR_{thres2}$ is set, and when $\Sigma CR < \Sigma CR_{thres1}$, the level of $\Sigma CR$ is defined as 0, and when $\Sigma CR_{thres1} \le \Sigma CR \le \Sigma CR_{thres2}$, the level of $\Sigma CR$ is defined as 1, and when $\Sigma CR > IR_{thres2}$, the level of $\Sigma CR$ is defined as 2.

When $\sigma^2_{\mathrm{CR}_k} < \sigma^2_{\mathrm{CR}_{k\,thres}}$, enter the following logic judgement ($CR$, $IR$ and $\Sigma CR$ refer to the current moment, namely, the moment M).

When $CR = 1$: the level of $IR$ is 0, and no matter what value the $\Sigma CR$ has, a control instruction 0 is output; when the level of $IR$ is 1 and the level of $\Sigma CR$ is 0, a control instruction 1 is output; when the level of $IR$ is 1 and the level of $\Sigma CR$ is 1, a control instruction 2 is output; when the level of $IR$ is 1 and the level of $\Sigma CR$ is 2, a control instruction 3 is output; when the level of $IR$ is 2 and the level of $\Sigma CR$ is 0, a control instruction 4 is output; when the level of $IR$ is 2 and the level of $\Sigma CR$ is 1, a control instruction 5 is output; when the level of $IR$ is 2 and the level of $\Sigma CR$ is 2, a control instruction 6 is output.

When $CR = 0$: the level of $IR$ is 0, and no matter what value the $\Sigma CR$ has, a control instruction 0 is output; for other cases, the level of the input control instruction is reduced by one level as compared to the case of $CR = 1$. Namely, when the level of $IR$ is 1 and the level of $\Sigma CR$ is 0, a control instruction 0 is output; when the level of $IR$ is 1 and the level of $\Sigma CR$ is 1, a control instruction 1 is output; when the level of $IR$ is 1 and the level of $\Sigma CR$ is 2, a control instruction 2 is output; when the level of $IR$ is 2 and the level of $\Sigma CR$ is 0, a control instruction 3 is output; when the level of $IR$ is 2 and the level of $\Sigma CR$ is 1, a control instruction 4 is output; when the level of $IR$ is 2 and the level of $\Sigma CR$ is 2, a control instruction 5 is output.

The control instructions are as follows: 0 indicates that no action is taken; 1 indicates a level 1 warning, for example, a visual warning; 2 indicates a level 2 warning, for example, an audible warning; 3 indicates a tactile warning, for example, to vibrate the seat belt; 4 indicates a pre-crash level 1 adjustment, for example, to tighten the safety belt with a small force; 5 indicates a pre-crash level 2 adjustment, for example, to tighten the safety belt with a medium force, while adjusting the seat position to a standard position (for example, zero gravity seat return); 6 indicates a pre-crash level 3 adjustment, for example, to tighten the safety belt with a large force, activate the pre-crash airbag, adjust the algorithm of the airbag controller, and adjust the threshold limit for airbag ignition, so as to fire the airbag in advance.

The injury risk and its reliability criterion may also be used for path selection in an automatic driving scene, namely, calculating an injury risk criterion *IR* in each path, and selecting a path with the lowest injury risk.

The injury risk and its reliability criterion may also be used to calculate the driving style of the driver and judge the driving risk:

$$P_{risk} = \frac{1}{t_2 - t_1} \int_{t_1}^{t_2} IR(t)\,dt$$

where, $t_1$ and $t_2$ are the starting time and the ending time for assessing the driving risk, and may be defined according to actual situations, where the higher the $P_{risk}$ is, the more aggressive the driving is, otherwise, the smaller the $P_{risk}$ is, the more conservative the driving is.

The human injury prediction module may also be used for accident rescue. Specifically, after a collision occurs, the human injury prediction model is input with the collision waveform recorded by the airbag controller and the state parameters of the occupant at the moment $T_0$ and the state parameters of the restraint system to obtain a predicted human injury curve, and the human injury risk or the human injury level is calculated from the injury curve.

The injury level is characterized by AIS, and may be calculated according to the definition of injury levels by NEHTSA. Taking the head injury level as an example: first calculate an HIC value, and then convert the HIC value into a risk probability corresponding to different injury levels according to the following formula; if a certain injury level is greater than a threshold (for example, 25%) for the first time, an injury of this level occurs.

$$P\left(AIS_{head} \geq 1\right) = \frac{1}{1 + e^{\left(1.54 + \frac{200}{HIC} - 0.0065 HIC\right)}},$$

$$P(AIS_{head} \geq 2) = \frac{1}{1 + e^{\left(2.49 + \frac{200}{HIC} - 0.0048 HIC\right)}},$$

$$P(AIS_{head} \geq 3) = \frac{1}{1 + e^{\left(3.39 + \frac{200}{HIC} - 0.0037 HIC\right)}},$$

$$P(AIS_{head} \geq 4) = \frac{1}{1 + e^{\left(4.90 + \frac{200}{HIC} - 0.0035 HIC\right)}},$$

$$P(AIS_{head} \geq 5) = \frac{1}{1 + e^{\left(7.82 + \frac{200}{HIC} - 0.0043 HIC\right)}},$$

$$P(AIS_{head} \geq 6) = \frac{1}{1 + e^{\left(12.24 + \frac{200}{HIC} - 0.0057 HIC\right)}},$$

Assuming that HIC = 1000, substituting the above equations with HIC can obtain the risks of head injuries with level 1, 2, 3, 4, 5 and 6 being 99.15%, 89.19%, 52.75%, 16.80%, 2.37% and 0.11% respectively, and then the head has a level-3 injury.

A vehicle collision risk prediction method for predicting a vehicle collision risk using the vehicle collision risk prediction device of the present disclosure, includes the following steps.

At step 1, human, environment and vehicle related information collected by a perception component 5100 is input into a basic component S200.

At step 2, a vehicle prediction module S220 of the basic component S200 outputs a collision risk *CR* and scene parameters of a collision based on the environment and vehicle related information, and a digital human body module S210 of the basic component S200 obtains state parameters of an occupant at a collision moment based on the human and vehicle related information.

At step 3, a vehicle injury prediction module S320 of the prediction component S300 outputs a vehicle injury risk *VIR* and a collision waveform according to the scene parameters of the collision, and inputs the collision waveform, the state parameters of the occupant at the collision moment and state parameters of the restraint system input by the perception component into a human injury prediction module to obtain a human injury risk HIR.

At step 4, the scene parameters of the collision and expectation parameters CR, *HIR* and VIR are input into a reliability prediction module S330 to obtain corresponding reliability criteria *ΣCR,ΣHIR,ΣVIR.*

At step 5, the decision component S400 assesses a comprehensive collision risk according to the acquired expectation parameters *CR, HIR* and *VIR* and the corresponding reliability criteria *ΣCR,ΣHIR,ΣVIR* of *CR, HIR* and *VIR* while taking into account extreme values and change trend criteria of predicted signals in the time domain, and outputs control instruction.

At step 6, according to a collision waveform recorded by an airbag controller, detailed vehicle and human injury conditions are obtained via the vehicle injury prediction module S320 and the human injury prediction module S310, and sent to a cloud server via a wireless network, so as to notify relevant parties including maintenance, insurance and rescue.

Based on the design described above, a method combining model design and data driving is built: on the one hand, based on the information observed by the perception system, a physical model (vehicle kinematics/dynamics model) is established to predict the future vehicle trajectory; on the other hand, a pre-trained, off-line machine/depth learning model is used to predict human and vehicle injury risks, and to predict the collision risk caused by driver operation uncertainty and the reliability criteria corresponding to the human and vehicle injury risks when a hypothetical collision occurs, so that the time of real-time calculation is greatly reduced while ensuring the prediction accuracy.

The exploding strategy of the restraint system is adjusted to adapt to the current scene, so as to minimize the injury risk. The device is capable of calculating the collision risk, the vehicle injury risk and the human injury risk in different planned routes when the vehicle automatically drives into a dangerous scene, so as to select an optimal route to reduce losses. In addition, when a collision occurs, injury information about the occupant and the vehicle after the collision can be provided in time and sent to a cloud server via a wireless network so as to notify relevant parties including maintenance, insurance and rescue, such that the rescue is precise, and the follow-up maintenance and insurance processes are performed in time.

According to the present disclosure, both the human injury prediction module and the vehicle injury prediction module may use a high-precision finite element simulation database as a training/validation sample, and the database has an injury label with a very high confidence, reducing the noise of the data and the variance of the model; the collision waveform prediction model adopts a method of predicting waveform eigenvalues and then reconstructing a waveform from the waveform eigenvalues, and the model can be trained to have a better accuracy with smaller sample dimensions, so as to predict the collision waveform. The human injury prediction model uses an encoder-decoder architecture, in which the encoder adopts a method combining manual extraction and machine automatic extraction for feature extraction to enable the model to integrate human injury prior knowledge, so as to improve the prediction accuracy of the model and reduce the sample dimensions required for model training; the vehicle injury prediction model and human injury prediction model can timely predict accurate information about the vehicle injury and human injury, so that 4S stores and insurance companies can proactively provide accurate after-sale and claims settlement services for customers to ensure that the injured people receive optimal rescue and medical services in the first time.

The above embodiments are merely preferred embodiments to sufficiently explain the present disclosure, and the scope of the present disclosure is not limited thereto. Those skilled in the art will recognize equivalents and modifications within the scope of the present disclosure.

**Claims**

1.  A vehicle collision risk prediction device, comprising: a perception component, a basic component, a prediction component, and a decision component, wherein

    the perception component is configured to acquire a comprehensive data set including human, environment and vehicle related information;
    the basic component is configured to output a collision risk *CR* and scene parameters of a collision according to the environment and vehicle related information, and obtain state parameters of an occupant at a collision moment according to the human and vehicle related information;
    the prediction component is configured to output a vehicle injury risk *VIR* and a collision waveform according to the scene parameters of the collision, determine a human injury risk *HIR* according to the collision waveform, the state parameters of the occupant at the collision moment and state parameters of a restraint system input by the perception component, and determine corresponding reliability criteria according to the scene parameters of the collision and expectation parameters including the collision risk *CR,* the human injury risk *HIR* and the vehicle injury risk *VIR,* and
    the decision component is configured to acquire the expectation parameters and corresponding reliability criteria, assess a comprehensive collision risk based on criteria of extreme values and change trends of predicted signals in the time domain, and output a control instruction.

2. The vehicle collision risk prediction device according to claim 1, wherein the perception component comprises a human perception module, an environment perception module, and a vehicle perception module;

the human perception module is configured to acquire the state parameters of the occupant in real time, wherein the state parameters of the occupant are acquired by a camera and/or a TOF camera, and comprise basic parameters of the occupant and position parameters of the occupant, the basic parameters of the occupant comprise a height, a weight and an age of the occupant, the position parameters of the occupant comprise a sitting attitude of the occupant and a sitting position of the occupant, the sitting attitude of the occupant comprises a recline angle and a leaning angle of the occupant, and the occupant sitting position refers to an absolute position of the occupant relative to the vehicle;

the environment perception module is configured to acquire parameters of the target object in real time, wherein the parameters of the target object comprise a mass, dimensions, a type, and kinematic parameters of the target object, and the kinematic parameters of the target object comprise a velocity, an acceleration, a yaw angle and a yaw rate of the target object;

the vehicle perception module is configured to acquire parameters of the current vehicle and the state parameters of the restraint system in real time, wherein the parameters of the current vehicle comprise a mass, dimensions, and kinematic parameters of the current vehicle, and the kinematic parameters of the current vehicle comprise a velocity, an acceleration, a yaw angle and a yaw rate of the current vehicle.

3. The vehicle collision risk prediction device according to claim 1, wherein the basic component comprises a digital human body module and a vehicle prediction module;

the digital human body module is configured to predict position parameters of the occupant from a current moment to a future moment according to scene parameters of a scene that the occupant is currently in;

the vehicle prediction module comprises a state parameter preprocessing unit, a trajectory prediction unit and a collision detection unit;

the state parameter preprocessing unit is configured to number and classify a target object locked by the perception component;

the trajectory prediction unit is configured to correct a motion state of the locked target object or predict a travel trajectory of a current vehicle and/or the target object within a preset time range using a kinematic or dynamic model;

the collision detection unit is configured to detect whether a collision occurs between the current vehicle and the target object at a specific moment.

4. The vehicle collision risk prediction device according to claim 3, wherein the state parameter preprocessing unit numbers and classifies a target object locked by the perception component specifically by: numbering the target object locked by the perception component, calculating a time-to-collision $TTC$ of each target object, and sorting the target object in an ascending order according to the $TTC$ of each target object; presetting a first time-to-collision threshold $TTC_{thres1}$ and a second time-to-collision threshold $TTC_{thres2}$, and if the time-to-collision $TTC$ of a target object satisfies $TTC_{thres1} \leq TTC \leq TTC_{thres2}$, defining the target object as a potential dangerous target object, classifying the target object into a potential dangerous target object set, and continuously monitoring a motion state of the target object; and if the time-to-collision $TTC$ of the target object satisfies $TTC < TTC_{thres1}$, defining the target object as a dangerous target object, and classifying the target object into a dangerous target object set;

the trajectory prediction unit corrects the motion state of the target object in the potentially dangerous target object set, and predicts the travel trajectories of the current vehicle and the target object in the dangerous target object set within a preset time range using the kinematic or dynamic model;

the collision detection unit is configured to detect whether a collision occurs between the current vehicle and the target object at a specific moment, and if the current vehicle comes into contact in space with the target object, define such contact as a collision and the moment as a collision moment $T_c$ with the collision risk $CR = 1$, and record the scene parameters of the collision at the moment $T_c$, the scene parameters of the collision including the velocity of the current vehicle, the velocity of the target object, a collision overlap ratio, a collision angle, the mass of the target object, and the type of the target object; and if no contact is detected, define the collision risk as $CR = 0$;

the detection of the collision detection unit comprises a rough detection stage and a detailed detection stage, in which the rough detection comprises: calculating a distance $L_i$ between a geometric center of the current vehicle and a geometric center of the target object, and calculating respective minimum enveloping circles of the current vehicle and the target object with the centers of the enveloping circles locating at the respective geometric centers of the current vehicle and the target object, and when the enveloping circle of the current vehicle is tangent to the enveloping circle of the target object, recording a distance between the geometric centers of the current vehicle and the target object as $L_{crit}$, and if $L_i < \alpha L_{crit}$, performing the detailed detection, *a* being a gain coefficient; the detailed detection is performed to detect whether there is an overlap or not in space between the current vehicle and the target object, and if there is an overlap, such overlap is defined as a contact, and the detailed detection is performed specifically using a separating axis theorem (STA) method or a Gibert-Johnson-Keerthi (GJK) method.

5. The vehicle collision risk prediction device according to claim 4, wherein the motion state is corrected through trajectory correction by means of an extended Kalman filter, and the dynamic model is a constant turn rate and acceleration motion model, a constant acceleration model or a constant velocity model.

6. The vehicle collision risk prediction device according to claim 1, wherein the prediction component comprises a human injury prediction module, a vehicle injury prediction module, and a reliability prediction module;

the human injury prediction module is configured to predict an injury curve of the occupant after a hypothetical collision in real time according to the collision waveform, the state parameters of the occupant and the state parameters of the restraint system when the current vehicle has a collision, and calculate a human injury risk according to the injury curve;
the vehicle injury prediction module comprises a deformation amount prediction unit and a collision waveform prediction unit;
the deformation amount prediction unit is configured to predict a vehicle injury risk after a hypothetical collision in real time according to the scene parameters of the collision at the collision moment; the collision waveform prediction unit is configured to predict a collision waveform after a hypothetical collision according to the scene parameters of the collision, the predicted collision waveform being used as one of inputs of the human injury prediction module;
the reliability prediction module is configured to predict reliability criteria $\Sigma CR, \Sigma HIR, \Sigma VIR$ of the expectation parameters *CR, HIR* and *VIR* according to the scene parameters and the expectation parameters when a hypothetical collision occurs.

7. The vehicle collision risk prediction device according to claim 6, wherein the human injury prediction module is an off-line human injury prediction model which is trained on the basis of a human injury data set, wherein the human injury data set is a database which is input with the collision waveform, the state parameters of the occupant and the state parameters of the restraint system and outputs a human injury curve, and is obtained by numerical calculation of the restraint system or collision tests;

the deformation amount prediction unit is an off-line deformation amount prediction model which is trained on the basis of a vehicle injury data set, and the collision waveform prediction unit is an off-line collision waveform prediction model which is trained on the basis of the vehicle injury data set, wherein the vehicle injury data set is a database which is input with the scene parameters of the collision at the collision moment $T_c$ and outputs a vehicle deformation amount and waveform characteristic values for the collision waveform prediction unit, and is obtained by whole vehicle finite element numerical calculation, whole vehicle collision tests or collision accident collection;
the reliability prediction module is an off-line reliability prediction model which is trained on the basis of a reliability quantitative criterion database, wherein the reliability quantitative criterion database refers to a database which is input with the scene parameters and the expectation parameters and outputs reliability criteria of the current scene.

8. The vehicle collision risk prediction device according to claim 7, wherein the deformation amount prediction model, the collision waveform prediction model and the reliability prediction model use a machine learning integration algorithm of a random forest and an XGBOOST machine learning integrated algorithm, or use a neural network algorithm of multi-layer perceptron, CNN and RNN.

9. The vehicle collision risk prediction device according to claim 6, wherein the reliability prediction module performs calculation by: according to the scene parameters and the expectation parameters at the current moment, while considering driver operation uncertainty, setting U discrete values of the driver operation uncertainty corresponds to U different driving trajectories, and obtaining U different vehicle collision risk prediction results, U human injury risk prediction results and U vehicle injury risk prediction results according to the vehicle prediction module, the human injury prediction module and the vehicle injury prediction module, respectively, represented as:

$[(CR_{k\_1}, HIR_{k\_1}, VIR_{k\_1}), (CR_{k\_2}, HIR_{k\_2}, VIR_{k\_2}), \ldots, (CR_{k\_U}, HIR_{k\_U}, VIR_{k\_U})]$,

the reliability quantitative criterion for the k-th target object is represented as:

$$\begin{cases} \sum CR_k = \frac{1}{U}\sum_{r=1}^{U}(CR_{k\_r} - CR_k)^2 \\ \sum HIR_k = \frac{1}{U}\sum_{r=1}^{U}(HIR_{k\_r} - HIR_k)^2; \\ \sum VIR_k = \frac{1}{U}\sum_{r=1}^{U}(VIR_{k\_r} - VIR_k)^2 \end{cases}$$

where the smaller the $\Sigma CR$ is, the more accurate the CR is and more likely to occur, otherwise, the greater the $\Sigma CR$ is, the more unstable the CR is when the driver makes an operation for intervention and less likely to occur; the smaller the $\Sigma HIR$ is, the more accurate the *HIR* is and more likely to occur, otherwise, the greater the $\Sigma HIR$ is, the more unstable the *HIR* is when the driver makes an operation for intervention and less likely to occur; the smaller the $\Sigma VIR$ is, the more accurate the *VIR* is and more likely to occur, otherwise, the greater the $\Sigma VIR$ is, the more unstable the *VIR* is when the driver makes an operation for intervention and less likely to occur.

10. The vehicle collision risk prediction device according to claim 9, wherein the driver operation uncertainty is quantitatively **characterized by**: discretizing, if physical conditions permit, the acceleration *a* and the yaw rate $\omega$ in a driver operation behavior database, setting $\zeta$ discrete values for the acceleration *a* and $\eta$ discrete values for the yaw rate $\omega$, i.e., $a = [a_1, a_2, \ldots, a_\zeta]$, $\omega = [\omega_1, \omega_1, \ldots, \omega_\eta]$, and establishing a driver operation behavior posteriori model and generating different trajectories.

11. The vehicle collision risk prediction device according to any one of claims 1 to 10, wherein the decision component outputs the control instruction through fuzzy control, empirical calibration, or logical judgment.

12. A vehicle collision risk prediction method for predicting a vehicle collision risk using the vehicle collision risk prediction device according to any one of claims 1 to 11, the method comprising the steps of:

step 1, inputting a comprehensive data set acquired by a perception component into a basic component, the comprehensive data set including human, environment and vehicle related information;

step 2, outputting, by the basic component, a collision risk *CR* and scene parameters of a collision based on the environment and vehicle related information, and obtaining state parameters of an occupant at a collision moment based on the human and vehicle related information;

step 3, outputting, by a prediction component, a vehicle injury risk *VIR* and a collision waveform according to the scene parameters of the collision, and determining a human injury risk *HIR* according to the collision waveform, the state parameters of the occupant at the collision moment and state parameters of a restraint system input by the perception component;

step 4, determining, by the prediction component, corresponding reliability criteria according to the scene parameters of the collision and expectation parameters including the collision risk *CR,* the human injury risk *HIR* and the vehicle injury risk *VIR;*

step 5, assessing, by the decision component, a comprehensive collision risk according to the acquired expectation parameters and the corresponding reliability criteria and based on criteria of extreme values and change trends of predicted signals in the time domain, and outputting a control instruction; and

step 6, according to a collision waveform recorded by an airbag controller, obtaining, by the prediction component, detailed vehicle and human injury conditions, and sending the detailed vehicle and human injury conditions to a cloud server via a wireless network, so as to notify relevant parties including at least one of maintenance, insurance and rescue.

Fig. 1

Fig. 2

Fig. 3

Fig. 4

Fig. 5

Waveform

Acceleration $A(t)$

$$m_j = \frac{A(t)_{t=j} - A(t)_{t=j-1}}{t_j - t_{j-1}}$$

$t_k = t_{A(t)=0}$

$$a_i = \frac{2t_k}{(i\pi)^2} \sum_{j=1}^{k} m_j \left[ \sin\left(\frac{i\pi t_j}{t_k}\right) - \sin\left(\frac{i\pi t_{j-1}}{t_k}\right) \right]$$

**Extraction of eigenvalues of acceleration curve**

Rotational displacement $D(t)$

$r_1 = D(t)_{t=t_0}, r_2 = D(t)_{t=t_1}, ..., r_n = D(t)_{t=t_k}$

Eigenvalues: $r_i, i = 1, 2, \ldots, n$

**Extraction of eigenvalues of rotational displacement**

$$\omega = \frac{\pi}{t_k}$$

$$a(t) = \sum_{i=1}^{n} a_i \sin(i\omega t)$$

$$d_{translation}(t) = \iint a(t) dt$$

$$d_{rotation}(t) = f(r_i), i = 1, 2, ..., n$$

**Reconstruction of displacement curve from eigenvalues**

Fig. 6

| | Europäisches Patentamt<br>European Patent Office<br>Office européen des brevets | **EUROPEAN SEARCH REPORT** | **Application Number**<br><br>EP 23 17 2671 |
|---|---|---|---|

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | US 2011/130111 A1 (CRANDALL JEFF R [US] ET AL) 2 June 2011 (2011-06-02)<br>* paragraphs [0002], [0009], [0011], [0012], [0020], [0021], [0026], [0065], [0072], [0088] – [0110]; figures 1-8 *<br>* abstract * | 1-12 | INV.<br>B60R21/0134 |
| X | US 8 463 500 B2 (CUDDIHY MARK [US]; RAO MANOHARPRASAD K [US] ET AL.) 11 June 2013 (2013-06-11)<br>* column 1, line 7 – line 10 *<br>* column 3, line 22 – column 15, line 23; figures 1-18 *<br>* abstract * | 1-12 | |
| X | CN 115 099 096 A (CHONGQING CHANGAN AUTOMOBILE CO LTD) 23 September 2022 (2022-09-23)<br>* paragraphs [0001], [0062] – [0134]; figures 1-8 *<br>* abstract * | 1,12 | |
| X | US 2019/283739 A1 (KIM EUNGSEO [KR] ET AL) 19 September 2019 (2019-09-19)<br>* paragraphs [0002], [0046] – [0139]; figures 1-18 *<br>* abstract * | 1,12 | TECHNICAL FIELDS<br>SEARCHED (IPC)<br><br>B60R |
| X | US 9 254 804 B2 (DENSO CORP [JP]) 9 February 2016 (2016-02-09)<br>* column 1, line 12 – line 13 *<br>* column 3, line 1 – column 10, line 48; figures 1-6 *<br>* abstract * | 1,12 | |

The present search report has been drawn up for all claims

| Place of search | Date of completion of the search | Examiner |
|---|---|---|
| Berlin | 24 October 2023 | Wauters, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 17 2671

This annex lists the patent family members relating to the patent documents cited in  the above-mentioned European search report.
The members are as contained in the European Patent Office EDP file on
The European Patent Office is in no way liable for these particulars which are merely given for the purpose of information.

24-10-2023

| Patent document cited in search report | | Publication date | Patent family member(s) | | Publication date |
|---|---|---|---|---|---|
| US 2011130111 | A1 | 02-06-2011 | EP | 2291302 A1 | 09-03-2011 |
| | | | US | 2011130111 A1 | 02-06-2011 |
| | | | WO | 2009137582 A1 | 12-11-2009 |
| US 8463500 | B2 | 11-06-2013 | DE | 102007015768 A1 | 11-10-2007 |
| | | | GB | 2436692 A | 03-10-2007 |
| | | | US | 2007228704 A1 | 04-10-2007 |
| CN 115099096 | A | 23-09-2022 | NONE | | |
| US 2019283739 | A1 | 19-09-2019 | CN | 110281924 A | 27-09-2019 |
| | | | DE | 102018125638 A1 | 19-09-2019 |
| | | | KR | 20190109850 A | 27-09-2019 |
| | | | US | 2019283739 A1 | 19-09-2019 |
| US 9254804 | B2 | 09-02-2016 | DE | 102014100384 A1 | 24-07-2014 |
| | | | JP | 5700263 B2 | 15-04-2015 |
| | | | JP | 2014141127 A | 07-08-2014 |
| | | | US | 2014207341 A1 | 24-07-2014 |

EPO FORM P0459

For more details about this annex : see Official Journal of the European Patent Office, No. 12/82